# EUROPEAN PATENT APPLICATION

(11) **EP 1 569 134 A1**
(43) Date of publication of application: **31.08.2005**
(21) Application number: 04004156.8
(22) Date of filing: 24.02.2004
(51) Int. Cl.: G06F 17/30

(54) **A computer system, a database for storing electronic data and a method to operate a database system for converting and displaying archived data**

(71) Applicant: SAP Aktiengesellschaft, 69190 Walldorf (DE)
(72) Inventor: Steinmaier, Carola, 69120 Heidelberg (DE); Pfeifer, Marcus, 69117 Heidelberg (DE); Brinkmöller, Bernhard, 69168 Wiesloch (DE)
(74) Representative: Hössle Kudlek & Partner

(57) **Abstract**

A computer system (10) comprising:
a database (14) containing a plurality of data documents (16) stored thereon, each data document containing at least one data field;
an archive system (22) for electronically archiving data documents (26.1, 26.2, 26.3) originating from said database (14);
said database (14) comprising:
   a conversion control table (18) containing conversion rule information pertaining to the at least one data field of a data document (26.1, 26.2, 26.3) archived in said archive system (22) wherein content of data fields contained in said retrieved archive data document (26.1) is replaced by a new content by means of said conversion control table (18).

## Description

### Field of the invention

The present invention relates generally to the field of electronic data processing, and more particularly to a computer system, a database for storing electronic data and a method to operate a database system.

### Description of the Related Art

Today, data is almost entirely processed electronically by means of large computer systems. Particularly in the field of operating a business, a large amount of data covering all aspects of a business, particularly in the context with customers, orders, billing, machine or device data etc., accumulate over the time. In order not to overload the database of the computer system, there is usually the wish to delete data that is not needed anymore, e.g. data concerning a finished business activity or process. However, very often there exists a legal requirement to keep such data over a given time period which can be five years and even longer. As a solution hereto, software developers created so-called archive systems in which all kind of data and data documents can be archived once they are not needed in the database anymore. However, there is the drawback that if master data or customizing data is changed, archived data documents which are referring to such master or customizing data become faulty and sometimes even cannot be displayed anymore. Changes in the master data or customizing data occur for example in the case of a business merger or buy-out. Due to legal requirements, the majority of data documents have to be kept for rather long time periods of five years and longer, thus increasing the probability that master data and data documents do not match anymore.

To date, the remedy for this problem is to convert all archived data documents, i.e. the complete archived data documents are read form the read-only archive system, the changed data field contents are replaced and new files for storage in the archive system are created. However, this process requires a very high timely effort, and afterwards the original files are usually not available anymore.

### Summary of the Invention

It is therefore an object of the invention to provide a computer system, a database for storing electronic data and a method to operate a database system with improved possibilities, overcoming the above-identified drawbacks.

Particularly, it is an object of the invention to provide a computer system, a database for storing electronic data and a method to operate a database system which allows the correct display of archived data even in the case of altered master data or customizing data.

These objects are achieved by proposing a computer system with the features of claim 1, a database with the features of claim 2 and a method to operate a database system with the features of claim 3. The invention comprises a database on which a plurality of data documents is stored and which is interconnected with an archive system for electronically archiving data documents originating from the database. The database further comprises a conversion control table containing conversion rule information pertaining to the at least one data field of a data document archived in the archive system.

According to the invention, upon retrieving and opening a data document which is archived in an archive system, conversion rule information pertaining to the retrieved archive data document is retrieved from a database interconnected with the archive system such that any data field content in the retrieved archive data document which has been subject to a master data change is displayed with its new master data content.

It is to be understood that in the context of this invention, the terms "master data" and "customizing data" comprise any kind of data which is valid for a whole enterprise, changes to such data affecting a multitude of existing data documents. An example for such master data are the names or numbers of plant facilities in an enterprise wherein every plant facility is identified by a given name or number. In case of a merger of companies, there might be a change of names or numbers in order to properly identify the entirety of the new plant facilities. In the context of the following description, the term "master data" is used to cover all kind of such data. Further, the term "archive system" defines a read-only medium on which data documents originating from a database are archived, the data to be archived being initially written on the read-only medium. Still further, the term "control table" relates to a computer-implemented control element which operates on the basis of a table or matrix.

The invention thus allows to retrieve an archived data document together with conversion control information defining conversion rules for the content of master data relevant data fields. The conversion rule information stored in the database automatically sets the display content of data fields which are sensitive to master data changes to the correct and updated field content without the original data document being changed.

The invention also covers a computer program with program coding means which are suitable for carrying out a process according to the invention as described above when the computer program is run on a computer. The computer program itself as well as stored on a computer-readable medium is claimed.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief description of the Drawings

In the drawings,
Figure 1 is a schematic block diagram of a computer system according to the invention; and
Figure 2 is a schematic block diagram illustrating retrieval and display of an archived data document according to the invention.

### Detailed Description

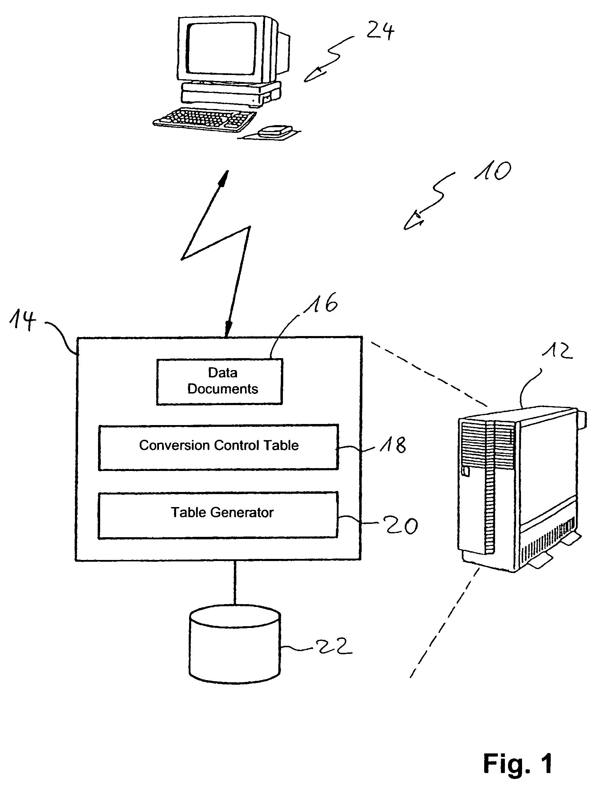

The invention is illustrated by means of one possible embodiment in which a computer system 10 comprises a client computer 24 and a database system 12 (cf. Figure 1). The database system 12 comprises a database 14 and an archive system 22, the latter being interconnected with the database 14. A plurality of data documents 16 is stored on the database 14. As already explained above, data documents which are not needed on database 14 anymore can be archived in the archive system 22. Thus, the archive system serves as an off-load for the database. The archive system 22 typically is a read-only medium.

As already mentioned above, there are situations in which data fields of archived data documents refer to so-called master data, the master data having been subject to a change since the archiving of the data document. In such a situation, the archived data document and the master data do not match anymore. According to the invention, correct display of the archived data document is made possible by storing conversion rule information pertaining to the data documents archived in the archive system.

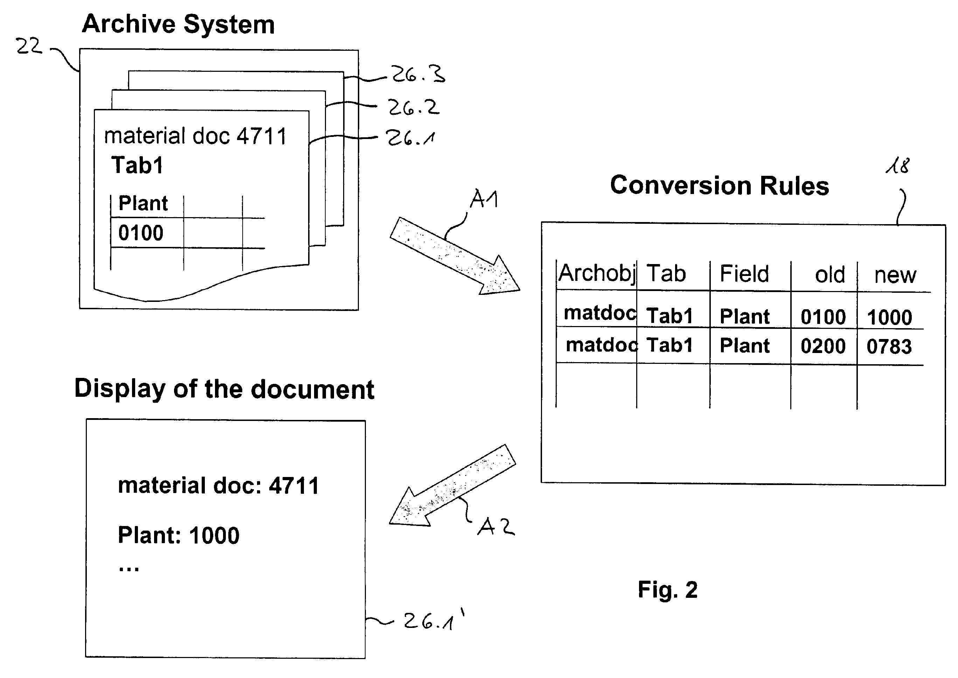

The way the invention works is now described in more detail with reference to Figure 2.

The schematic block diagram depiction of Figure 2 shows an archive system 22 with a plurality of archived data documents 26.1, 26.2, 26. 3. In the following, the invention is described in an exemplary manner with regard to a first data document 26.1 whose title is "material doc 4711". The data document 26.1 (as all the other data documents) comprises a plurality of data fields which are distributed on different tables of which Tab1 is shown in Figure 2. This table Tab1 contains various data fields, one of them being a data field "Plant" with the content "0100", i.e. data document "material doc 4711" contains information pertaining to plant no. 0100 of the enterprise.

In the conversion rule table 18, conversion rules are stored. The table of the conversion control table 18 comprises in the described example five columns. The first column with the header "Archobj" defines the class of archived object which in the example shown are material documents ("matdoc"). In the second column, the table name of the respective document is defined. In a third column, the field name is defined, in the example on hand the data field "Plant". In the remaining two columns, the old and the new contents of the defined data field are identified. In the example on hand, we have the situation that the number of plant no. 0100 has been changed into 1000 and that the number of another plant no. 200 has been changed into 0783.

Upon retrieval of the data document 26.1 from the archive system 22, the conversion table 18 is loaded from the database 14. The conversion control table 18 contains conversion rule information as described above, the conversion rules pertaining to the various data fields of the data documents 26.1, 26.2, 26.3, ... archived in the archive system 22. Arrows A1 and A2 in Figure 2 illustrate that the data document 26.1 from the archive system 22 and the conversion table 18 from the database 14 are retrieved together (arrow A1) and processed for display on the client 24 (arrow A2). Client 24 is interconnected with the database 14 by means of appropriate elements which are well known to the person skilled in the art, e.g. appropriate hardware and software such as a processing unit and/or server and interfaces.

Processing of the retrieved data document 26.1 and the control table 18 for display on the client computer 24 comprises an evaluation of the conversion rule information of the control table and a merging of the obtained information with the data document 26.1 to be displayed by appropriate evaluation and merger means. The display can be effected in such a manner that the content of every data field of the data document 26.1 which is listed in the conversion control table is replaced by the content identified in the column "new" of the conversion rules. This leads to a display as depicted with reference numeral 26.1' in Figure 2, stating formerly plant 0100 correctly as plant no. 1000 without the original document "material doc 4711" being changed. In case the data document 26.1 would also contain a reference to plant no. 0200, there would be an according replacement in the display with the new plant number 0783.

Thus, the conversion according to the invention on the basis of a conversion control table is made "on the fly" and only consumes minimal additional running time (computing time).

The control table according to the invention is a table which can be generated by an appropriate generator 20 (cf. Figure 1) which automatically generates new entries on the basis of changes occurring to data field that are identified as master data relevant data fields. Of course, the table can also be generated manually.

The invention therefore provides a system and a method to process archived data without actually changing the archived data documents so that the original state of the data document is reproducible at any time, eliminating a time consuming conversion of archived data documents every time a change to a master data relevant data field occurs.

## Claims

1. A computer system (10) comprising:
a database (14) containing a plurality of data documents (16) stored thereon, each data document containing at least one data field;
an archive system (22) for electronically archiving data documents (26.1, 26.2, 26.3) originating from said database (14);
said database (14) comprising:
a conversion control table (18) containing conversion rule information pertaining to the at least one data field of a data document (26.1, 26.2, 26.3) archived in said archive system (22) wherein content of data fields contained in said retrieved archive data document (26.1) is replaced by a new content by means of said conversion control table (18).

2. A computer system (10) according to claim 1, further comprising a client (24) interconnected with said database (14) and set up to retrieve any desired of said data documents (26.1, 26.2, 26.3) from said archive system (22) for display of said retrieved archive data document (26.1).

3. A computer system (10) according to claim 1 or 2, wherein said content is replaced upon display of the retrieved archive data document (26.1).

4. A database (14) for storing electronic data,
said database (14) containing a plurality of data documents (16) stored thereon, each data document containing at least one data field; and
said database (14) being arranged to be interconnected with an archive system (22) for electronically archiving data documents (26.1, 26.2, 26.3) originating from said database;
said database (14) further comprising:
a conversion control table (18) stored thereon containing conversion rule information pertaining to the at least one data field of a data document (26.1, 26.2, 26.3) archived in said archive system (22) wherein content of data fields contained in said retrieved archive data document (26.1) is replaced by a new content by means of said conversion control table (18).

5. A database (14) according to claim 4, said database being arranged to be interconnected with a client (24), said client (24) being set up to retrieve any desired of said data documents (26.1, 26.2, 26.3) from said archive system (22) through said database for display of said retrieved archive data document (26.1).

6. A database (14) according to claim 4 or 7, wherein said content is replaced upon display of the retrieved archive data document (26.1).

7. A method to operate a database system (12),
said database system (12) comprising a database (14) containing a plurality of data documents (16) stored thereon, each data document containing at least one data field, and an archive system (22) for electronically archiving data documents (26.1, 26.2, 26.3) originating from said database (14), wherein upon retrieving and opening a data document (26.1) archived in said archive (22) system conversion rule information pertaining to said retrieved archived data document (26.1) is retrieved from said database (14) and displayed together with said retrieved archived data document (26.1).

8. A method according to claim 7, wherein said conversion rule information displayed together with said retrieved archived data document (26.1) is stored in a conversion control table (18).

9. A method according to claim 7, wherein said conversion control table (18) is a conversion control table (18).

10. A method according to claim 7, wherein said conversion rule information replaces content of data fields contained in said retrieved archived data document (26.1).

11. A method according to claim 7, wherein said conversion rule information replaces content of data fields contained in said retrieved archived data document (26.1) upon display of said retrieved archived data document (26.1).

12. A method according to claim 7, wherein said conversion rule information comprises former content of defined data fields and their relating new content.

13. A method according to claim 12, wherein content of data fields contained in said retrieved archived data document (26.1) is replaced with new content upon display if such new content is identified in said conversion rule information.

14. A computer program product with a computer-readable medium and a computer program stored on the computer-readable medium with program coding means which are suitable for carrying out a method according to any one of claims 7 to 13 when the computer program is run on a computer.

15. A computer program with program coding means which are suitable for carrying out a method according to any one of claims 7 to 13 when the computer program is run on a computer.

16. A computer-readable medium with a computer program stored thereon, the computer program comprising program coding means which are suitable for carrying out a method according to any one of claims 7 to 13 when the computer program is run on a computer.
